# EUROPÄISCHE PATENTSCHRIFT

(11) **EP 2 280 795 B1**
(45) Veröffentlichungstag und Bekanntmachung des Hinweises auf die Patenterteilung: **17.07.2013**
(21) Anmeldenummer: 09734628.2
(22) Anmeldetag: 22.04.2009
(51) Int. Cl.: B23B 51/00

(54) **DREHANTREIBBARES WERKZEUG ZUR SPANABTRAGENDEN BEARBEITUNG MIT EINEM SCHNEIDORGAN**
ROTARY-DRIVEN TOOL FOR CUTTING MACHINING WITH A CUTTING BODY
OUTIL ENTRAÎNÉ EN ROTATION PRÉSENTANT UN ORGANE DE COUPE, POUR L'USINAGE PAR ENLÈVEMENT DE COPEAUX

(30) Priorität: 25.04.2008 DE 102008020963
(43) Veröffentlichungstag der Anmeldung: 09.02.2011
(73) Patentinhaber: Gühring OHG, 72458 Albstadt (DE)
(72) Erfinder: KLETTENHEIMER, Markus, 72458 Albstadt (DE); SCHLAGENHAUF, Uwe, 72479 Strassberg (DE)
(74) Vertreter: Meitinger, Thomas Heinz
(86) Internationale Anmeldenummer: PCT/DE2009/000536
(87) Internationale Veröffentlichungsnummer: WO 2009/129792

(56) Entgegenhaltungen:
- EP-A- 1 310 313
- EP-A- 1 555 075
- EP-A- 1 806 195
- WO-A-02/34441
- DE-A1- 19 543 233

## Beschreibung

Die Erfindung betrifft ein drehantreibbares Werkzeug zur spanabtragenden Bearbeitung mit einem Schneidorgan nach dem Oberbegriff des Anspruchs 1, wie es aus der EP 1310 313 A1 bekannt ist.

### Stand der Technik:

Aus der deutschen Offenlegungsschrift DE-A1 198 34 635 A1 ist ein Bohrwerkzeug mit einem sich in Richtung einer Längsachse erstreckenden Halter bekannt, der einen Schaftabschnitt und einen Kopfabschnitt aufweist, in dem eine orthogonal zur Längsachse, in Richtung einer Querachse verlaufende Nut ausgebildet ist. Des Weiteren ist in der Nut ein Schneideinsatz eingesetzt und ein Klemmelement vorgesehen, das eine im Schneideinsatz ausgebildete Aufnahmebohrung und eine in wenigstens einem der Nutschenkel ausgebildete Bohrung durchsetzt und den Schneideinsatz gegen den wenigstens einen Nutschenkel klemmt. Die Mittelachse der Bohrung in dem wenigstens einen Nutschenkel ist gegenüber der Mittelachse der Aufnahmebohrung im Schneideinsatz versetzt. Das Klemmelement und der Schneideinsatz bilden eine Gruppe von Bauteilen, aus der ein Bauteil über eine Schrägfläche mit dem anderen Bauteil in der Art und Weise eines Keilflächengetriebes in der Weise zusammenwirkt, dass der Schneideinsatz im montierten Zustand des Bohrwerkzeugs in Richtung der Längsachse gegen eine erste Anschlagfläche und in Richtung der Querachse gegen eine zweite Anschlagfläche gepresst ist. Der Schneideinsatz weist einen sich in Richtung der Längsachse erstreckenden Fortsatz auf, der sich in eine von der Nutgrundfläche aus in Richtung der Längsachse zum Schaftabschnitt hin ausgebildete Vertiefung erstreckt, in der die zweite Anschlagsfläche vorgesehen ist.

In einer Ausführungsform ist der Schneideinsatz im Querschnitt trapezförmig.

Die EP 1 310 313 A1 beschreibt ein Werkzeug zur spanenden Bearbeitung mit einem Schneidkopf und einem Halter.

### Aufgabe und Vorteile der Erfindung:

Der Erfindung liegt die Aufgabe zugrunde, ein Werkzeug der einleitend beschriebenen Art bereitzustellen, bei welchem sich die Schneiden bei vergleichsweise einfacherem Aufbau austauschen lassen und wobei insbesondere eine Erhöhung der mechanischen Stabilität des Werkzeugs erziehlt werden kann.

Diese Aufgabe wird durch die Merkmale des Anspruchs 1 gelöst.

In den abhängigen Ansprüchen sind vorteilhafte und zweckmäßige Weiterbildungen der Erfindung angegeben.

Die Erfindung geht von einem Werkzeug zur spanabtragenden Bearbeitung, insbesondere Bohrwerkzeug zur beispielsweise Metallbearbeitung mit einem Schneidorgan und einem Halter mit einem Schaftteil aus, wobei am Schneidorgan zumindest eine Schneide und ein schwalbenschwanzförmiger Bereich und am Halter eine dazu passende Schwalbenschwanz-Ausnehmung ausgebildet ist, wobei das Schneidorgan und die passende Schwalbenschwanz-Ausbildung derart aufeinander abgestimmt sind, dass das Schneidorgan nur lateral zu einer Längsachse des Halters in den Halter eingeschoben werden kann, wobei zur Fixierung des Schneidorgans gegenüberliegende Flankenabschnitte der Schwalbenschwanz-Ausnehmung, zwischen welchen der schwalbenschwanzförmige Bereich bestimmungsgemäß angeordnet ist; über eine Schraubenverbindung im Halter aufeinander zu bewegbar sind und wobei das Schneidorgan beim Fixieren durch die Schraubverbindung eine Kraft in axialer Richtung erfährt.

Der Kern der Erfindung liegt nun darin, dass das Schneidorgan ein Schneidkopf ist und dass die Kraft in axialer Richtung ausschließlich durch den schwalbenschwanzförmigen Bereich in Zusammenwirkung der Schwalbenschwanz-Ausnehmung im Halter bereitgestellt ist. Diese Vorgehensweise hat den Vorteil, dass auf einfache Weise ein Schneidkopf, der z. B. wie ein üblicher Bohrerkopf ausgebildet ist, sich mit einem Halter verbinden lässt, der den restlichen Bohrergrundkörper bildet. Damit ist man in der Bohrergeometrie nicht beschränkt. Es ist insbesondere möglich, alle üblichen Bohrergeometrien zu realisieren. Insbesondere ist vorgesehen, dass der schwalbenschwanzförmige Bereich als Fortsatz aus der stirnseitigen Anschlagfläche herausragt. Beispielsweise sind beidseitig des schwalbenschwanzförmigen Fortsatzes Anschlagflächen ausgebildet, die in einer Ebene liegen, aus welcher der Fortsatz herausragt.

Insbesondere lässt sich der Bohrerkopf mit Schneiden und Spannuten völlig herkömmlich, z. B. durch Schleifen, herstellen.

Durch die Positionierung in axialer Richtung nur durch die Schwalbenschwanzgeometrie ist es nicht erforderlich in diese Ausrichtung zum Beispiel Befestigungsöffnungen aufeinander abzustimmen.

In einer bevorzugten Ausgestaltung der Erfindung ist vorgesehen, dass der schwalbenschwanzförmige Bereich an einer stirnseitigen Anschlagfläche des Schneidkopfes anschließt. Bei einer solchen Ausführungsform wird der Schneidkopf in axialer Richtung vorzugsweise nicht gegen einen Grund der Schwalbenschwanz-Ausnehmung positioniert, sondern nur gegen diesen stirnseitigen Anschlag. Die damit näher zu den Schneiden hin rückende Verbindungsstelle zwischen Kopf und Halter hat den Vorteil einer höheren Stabilität des Werkzeugs. Außerdem sind die dazu passenden Anschlagflächen am Halter leicht zugänglich, insbesondere für eine Bearbeitung.

In Bezug auf den Halter ist es bevorzugt, dass die stirnseitige Anschlagfläche dem Endbereich der Flankenabschnitte, insbesondere dem vordersten stirnseitigen Endbereich der Flankenabschnitte gegenüberliegt. Eine solche Ausgestaltung lässt sich rationell herstellen und vergleichsweise einfach auf die Schwalbenschwanz-Ausnehmung im Halter abstimmen.

Im Weiteren ist es bevorzugt, wenn der schwalbenschwanzförmige Bereich an der stirnseitigen Anschlagfläche derart anschließt, dass in einem in die Schwalbenschwanz-Ausnehmung eingesetzten Zustand ein Drehmoment beim Bohren nur über den schwalbenschwanzförmigen Bereich übertragen wird.
In einer überdies bevorzugten Ausgestaltung der Erfindung ist der schwalbenschwanzförmige Bereich auf die Schwalbenschwanz-Ausnehmung derart abgestimmt, dass die Kraft in axialer Richtung im Spannzustand des Schneidkopfes die stirnseitige Anschlagfläche gegen jeweils eine Stirnseite der Flankenabschnitte der Schwalbenschwanz-Ausnehmung presst. Hierdurch lässt sich eine besonders steife Verbindung zwischen dem Schneidkopf und dem Halter erreichen. Dabei kann vor dem Verspannen vorzugsweise ein Spiel in axialer Richtung im eingeschobenen Zustand zwischen den Anschlagflächen am Schneidkopf und den Stirnseiten, insbesondere den jeweils vordersten Stirnseiten der Flankenabschnitte der Schwalbenschwanz-Ausnehmung bestehen. Beim Verspannen der Flankenabschnitte durch die Schraubverbindung wird dann der Schneidkopf gegen die Flankenabschnitte gezogen, so dass das Spiel verschwindet und der Schneidkopfsatz auf den Flankenabschnitten anliegt, wodurch sich eine definierte steife Befestigung des Schneidkopfs am Halter erzielen lässt.

In einem überdies bevorzugten Ausführungsbeispiel der Erfindung ist im Schwalbenschwanzbereich eine Ausnehmung auf eine im Halter geführte Schraube der Schraubverbindung in einer Weise abgestimmt, dass neben einer Lagefixierung durch einen Einschub des schwalbenschwanzförmigen Bereichs auch eine Zentrierung in Einschubrichtung des Schneidkopfes über die Schraube der Schraubenverbindung stattfindet. Durch diese Maßnahme lässt sich bei vergleichsweise einfacher Geometrie der Verbindung zwischen Schneidkopf und Halter lediglich durch Einschieben des Schneidkopfes und Anziehen der Schraube eine positionsgenaue Lagefixierung des Schneidkopfs zur Drehachse des Halters erreichen, die darüber hinaus eine hohe Stabilität aufweist.

Der Schneidkopf kann aus Vollhartmetall, insbesondere vollständig aus Vollhartmetall bestehen. Im Gegensatz dazu kann der Halter mit Schaftteil aus Stahl, z. B. HSS oder Werkzeugstahl gefertigt sein. Damit lässt sich eine Kostenoptimierung des Werkzeugs bei hoher Verschleißbeständigkeit erreichen. Es ist auch denkbar, dass der Schneidkopf aus HSS oder einem keramischen Schneidstoff besteht.

Damit die Flankenabschnitte der Schwalbenschwanz-Ausnehmung beim Verspannen sich in gewünschter Weise aufeinander zu bewegen, wird im Weiteren vorgeschlagen, dass am Boden der Schwalbenschwanz-Ausnehmung ein Schlitz in axialer Richtung ausgebildet ist, der den Halter in lateraler Richtung in zwei Teile trennt. Damit lässt sich auch sicherstellen, dass eine Bewegung der Flankenabschnitte beim Verspannen des schwalbenschwanzförmigen Bereichs in einem elastischen Bereich bleibt.

Außerdem ist es bevorzugt, wenn die Kontur des Halters mit Spannuten sich im Wesentlichen im Schneidkopf fortsetzt. Durch diese Maßnahme wird z. B. die Spanabfuhr vom Schneidkopf in den Bereich des Halters auch an der Verbindungsstelle von Schneidkopf und Halter nicht gestört. Vorzugsweise sind am Schneidkopf entlang einer Spannut Nebenschneiden ausgebildet, die eine exakte Führung des Werkzeugs sicherstellen.

In einer besonders bevorzugten Ausgestaltung der Erfindung ist die Ausnehmung im schwalbenschwanzförmigen Bereich rinnenförmig ausgeführt. Eine solche Ausgestaltung einer Schraubenausnehmung lässt sich vergleichsweise einfach in den schwalbenschwanzförmigen Bereich einbringen. Die rinnenförmige Ausnehmung kann z. B. als Führungsrinne in einer Weise ausgebildet sein, dass seitliche Wandungsabschnitte der Rinne auf einen Schraubenbereich der Spanschraube so abgestimmt sind, dass beim Eindrehen der Schraube in den Halter automatisch eine Zentrierung in Einschubrichtung des Schneidkopfes auf eine Drehachse stattfindet.

Überdies ist in einer weiteren Ausgestaltung der Erfindung ein Kühlkanal im Halter vorgesehen, der an einer Stirnseite des Halters, die zum Schneidkopf zeigt, eine Öffnung aufweist. Der Kühlkanal kann geradlinig oder spiralförmig, axial oder außermittig im Halter verlaufen. Es ist auch denkbar, dass zwei Kühlkanäle im Halter angeordnet sind, die beispielsweise parallel und/oder spiralförmig verlaufen. Die Kühlkanäle können sich im Schneidkopf fortsetzen.

Weiterhin weist in einer bevorzugten Ausgestaltung der Erfindung die Mantelfläche der Schraube eine Aussparung oder eine Verjüngung auf. Die zum Beispiel in einer rinnenförmigen Ausnehmung des Schneidkopfes angeordnete Schraube ist vorzugsweise mit einer Verjüngung versehen, die vollumfänglich im schwalbenschwanzförmigen Bereich vorgesehen ist. Diese Verjüngung ermöglicht ein vorzugsweise freies Fließen von Kühlmittel vom Kühlkanal des Halters über die Spannschraube zum Schneidkopf. Die Anzahl der Verjüngungen oder der Ausnehmungen ist beispielsweise der Kühlmittelkanäle im Halter und/oder der Schneiden des Schneidkopfes angepasst.
Damit kann zum Beispiel jede Schneide mit Kühlmittel versorgt werden, durch z. B. einen oder mehrere Kühlkanäle im Schneidkopf.

Die Kühlkanäle können auch so angeordnet sein, dass diese an einer Spannschraube vorbeiführen, ohne dass diese verjüngt werden muss.

In einer weiteren Ausgestaltung der Erfindung ist vorgesehen, dass im Schneidkopf im Bereich der Aussparung bzw. der Verjüngung eine Ausnehmung vorgesehen ist. Die Ausnehmung verläuft beispielsweise beginnend von der Verjüngung bzw. Ausnehmung auf der Schraube in Richtung einer Freifläche hinter eine Schneide des Schneidkopfes und mündet dort in eine Öffnung. Das Kühlmittel kann ausgehend von dem Kühlmittelkanal im Halter über die Verjüngung bzw. Ausnehmung auf der Schraube in die Ausnehmung im Schneidkopf bis hin zur Öffnung auf der Freifläche an die Schneidfläche fließen.

Überdies ist in einer weiteren Ausgestaltung der Erfindung der Halter dazu ausgelegt, die Spannschraube an ihrem freien Ende mit einer Gewindemutter zu spannen. Die Gewindemutter ist beispielsweise im Halter versenkt angeordnet. Bei der Verwendung einer Gewindemutter kann im Halter auf die Anordnung eines Innengewindes zur Befestigung der Spannschraube verzichtet werden.

Außerdem ist es bevorzugt, dass an der Gewindemutter eine Schrägfläche vorgesehen ist, die in einer entsprechenden Schrägfläche des Halters zugeordnet ist. Beim Einschrauben der Spannschraube in die Gewindemutter kann der Schneidkopf aufgrund der ineinander greifenden Schrägflächen zusätzlich zentriert werden.

In einem außerdem bevorzugten Ausführungsbeispiel ist der Schneidkopf plattenartig mit zur Schwalbenschwanz-Ausnehmung passenden Seitenflächen ausgebildet. Der Schneidkopf ist als Schneideinsatz mit einem Schwalbenschwanz vorgesehen, der auf zusätzliche Anschlagflächen zur Auflage an seitlichen Stirnflachen des Halters neben der Schwalbenschwanz-Ausnehmung verzichtet.

Überdies ist in einem weiteren Ausführungsbeispiel vorgesehen, dass das Werkzeug mit einem Halter mit einer geradlinig verlaufenden Spannut ausgebildet ist. Ein entsprechendes Werkzeug kann zum Beispiel für die Erzeugung einer Tiefenbohrung eingesetzt werden. Der Halter ist vorzugsweise ein Höhlkörper, der mit einem am dem Spannschaft gegenüberliegenden Ende angeordneten Schneidkopf mit mindestens einer Schneide verbunden ist.

Außerdem ist in einer überdies bevorzugten Ausgestaltung der Erfindung vorgesehen, dass zur Anordnung des Schneidkopfes am Halter ein Zwischenstück vorgesehen ist. Das Zwischenstück weist eine Schwalbenschwanzführung zur Aufnahme des Schneidkopfes bzw. eines Schneideinsatzes auf. Das freie Ende des Zwischenstücks ist beispielsweise mit einem Absatz versehen, der in den als Hohlkörper ausgebildeten Halter befestigt werden kann. Vorzugsweise ist das Zwischenstück aus einem HSS-Material (Hochleistungs-Schnellschnitt-Stahl) gebildet.

In diesem Zusammenhang ist es bevorzugt, dass zur Durchleitung von Kühlmittel das Zwischenstück wenigstens einen Kühlkanal aufweist. Dadurch ist eine gezielte Führung eines Kühlmittels über den Halter bis hin zur Schneide des Schneidkopfes bzw. des Schneideinsatzes möglich.

### Zeichnungen:

Ausführungsbeispiele der Erfindung sind in den Zeichnungen dargestellt und werden nachstehend unter Angabe weiterer Vorteile und Einzelheiten näher erläutert.

Es zeigen:
- Figur 1: den vorderen Teil inklusive Schneidkopf eines erfindungsgemäßen Bohrwerkzeugs in einer Seitenansicht,
- Figuren 2 und 3: lediglich den Schneidkopf eines Bohrwerkzeugs in einer Seitenansicht längs zu einer Einschubrichtung eines Schwalbenschwanzfortsatzes (Fig. 2) sowie quer dazu (Fig. 3),
- Figur 4: in einer dreidimensionalen Darstellung den vorderen Teil eines Bohrwerkzeugs mit Schneidkopf, Befestigungsschraube und transparent dargestelltem Grundkörper,
- Figur 5: einen erfindungsgemäßen Schneidkopf nach Figur 1 mit Spannschraube mit Gewindemutter und Kühlmittelführung,
- Figur 6: ein Zwischenstück in dreidimensionaler Darstellung,
- Figuren 7 und 8: einen als Schneideinsatz ausgebildeten Schneidkörper nach Figur 1 in Drauf- und Seitenansicht und
- Figur 9: einen Halter mit geradliniger Spannut in dreidimensionaler Darstellung.

### Beschreibung der Ausführungsbeispiele:

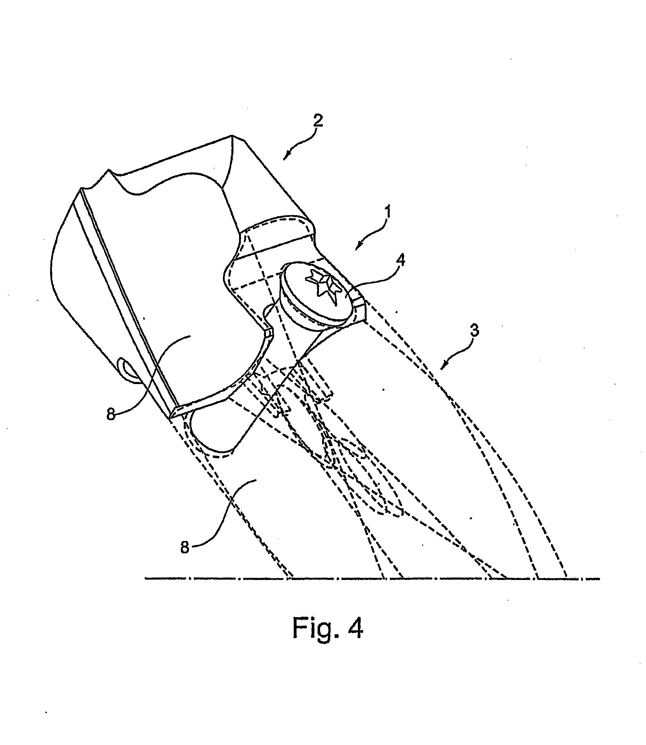

In Fig. 4 ist der vordere Abschnitt eines Bohrwerkzeugs 1 dargestellt. Das Bohrwerkzeug 1 umfasst einen Bohrerkopf 2 sowie einen Grundkörper 3, am welchem der Bohrerkopf 2 über eine Spannschraube 4 befestigt ist.

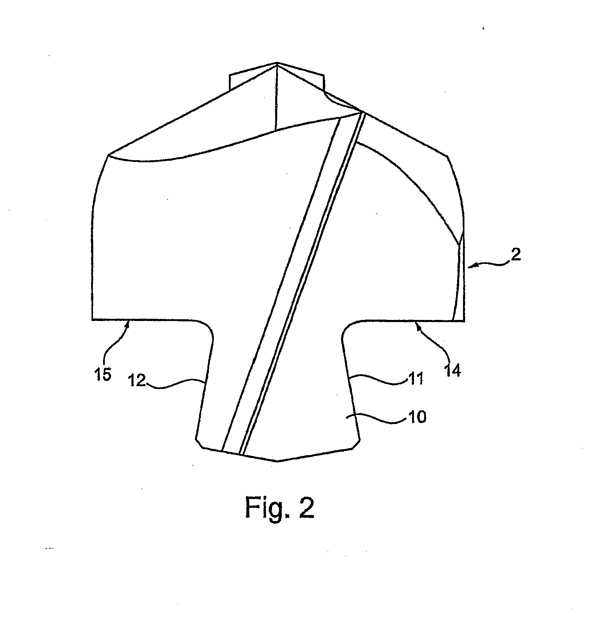

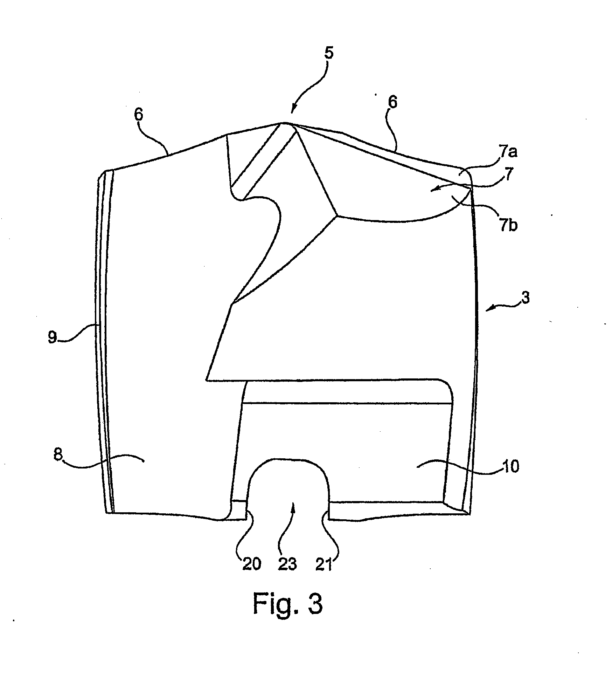

Details zum Schneidkopf 2 sind insbesondere aus den Fig. 2 und 3 ersichtlich.

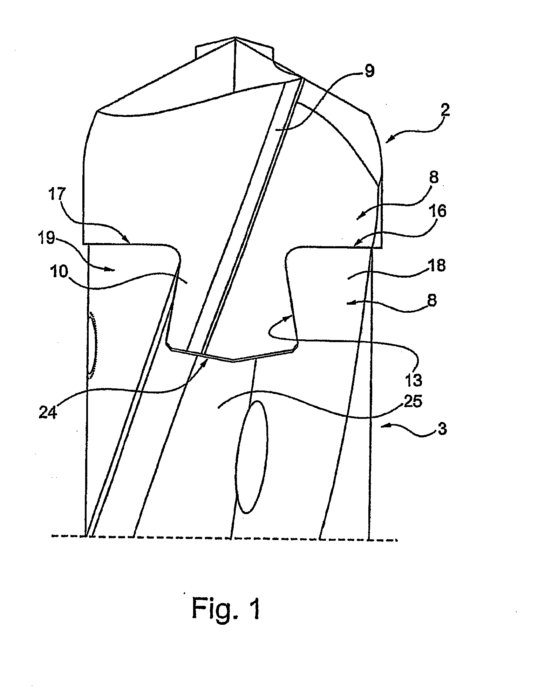

In Fig. 1 ist das Bohrwerkzeug 1 ohne Spannschraube 4 dargestellt.

Der Bohrerkopf 2 umfasst eine Bohrerspitze 5, von welcher zwei Hauptschneiden 6 ausgehen, an welche sich entgegen der Schneidrichtung der Hauptschneiden 6 jeweils eine Freifläche 7 anschließt. Die Freifläche 7 besteht aus zwei Teilflächen 7a und 7b, wobei die Teilfläche 7b einen größeren Freiwinkel aufweist als die Teilfläche 7a. Des Weiteren sind Spannuten 8 vorgesehen, die an der umfänglichen Außenseite des Bohrwerkzeugs 1 jeweils von einer Nebenschneide 9 begrenzt ist.

Die Spannuten 8 verlaufen spiralförmig und setzten sich im Grundkörper 3 fort.

Am Bohrerkopf 2 ist ein Schwalbenschwanzstück 10 ausgebildet mit sich zur Bohrerspitze 5 hin aufeinander zulaufenden Flanken 11, 12.

Dazu passend ist im Grundkörper 3 eine Ausnehmung 13 vorgesehen.

Der Bohrerkopf 2 weist Anschlagflächen 14, 15 auf, die in einer Ebene senkrecht zur Längsachse des Bohrwerkzeugs 1 liegen und auf dazu passende Anschlagflächen 16, 17 an Flankenabschnitten 18, 19 der Ausnehmung 13 abgestimmt sind. Dementsprechend liegen auch die Anschlagflächen 16, 17 in einer Ebene, die senkrecht zur Längsachse des Bohrwerkzeugs 1 sich erstreckt. Die Anschlagflächen 16, 17 bilden den vordersten stirnseitigen Endbereich der Flankenabschnitte 18, 19 der Ausnehmung 13.

Damit lässt sich der Bohrerkopf 2 seitlich entlang der Flanken 11, 12 des Schwalbenschwanzstücks 10 in die Ausnehmung 13 einschieben. Auf diese Weise wird das Schwalbenschwanzstück 10 bereits in einer Richtung quer zu den Flanken 11, 12 auf die Achse des Bohrwerkzeugs 1 zentriert.

In Einschubrichtung erfolgt eine Zentrierung durch Einschrauben der Spannschraube 4, indem ein mittlerer Abschnitt der Spannschraube 4 auf präzise gearbeitete Seitenwände 20, 21 einer rinnenförmigen Ausnehmung 23 im Schwalbenschwanzstück 10 trifft.

Die Spannschraube 4 kann sich in der Ausnehmung 23 frei drehen besitzt jedoch ein Gewinde, das sich in eine dazu passende Gewindebohrung in Flankenabschnitt 19 der Ausnehmung 13 einschrauben lässt.

Beim Einschrauben zentriert sich der Bohrerkopf 2 in Einschubrichtung des Schwalbenschwanzstücks 10 automatisch. Beim vollständigen Anziehen der Spanschrauben 4 wird durch die Keilwirkung beim Zusammenspiel des Schwalbenschwanzstücks 10 mit den Seitenwänden der Ausnehmung 13 der Bohrerkopf 2 axial in Richtung des Grundkörpers 3 gezogen, so dass die Anschlagflächen 14 und 16 bzw. 15 und 17 aufeinander gepresst werden.

Damit sich die Flankenabschnitte 18 und 19 beim Verspannen mit der Spanschraube 4 elastisch verformen ist in einem Boden 24 der Ausnehmung 13 ein quer durch den Grundkörper 3 laufender Schlitz 25 ausgebildet. Dadurch wird die effektive Länge der Flankenabschnitte vergrößert, um eine höhere Elastizität bereitzustellen.

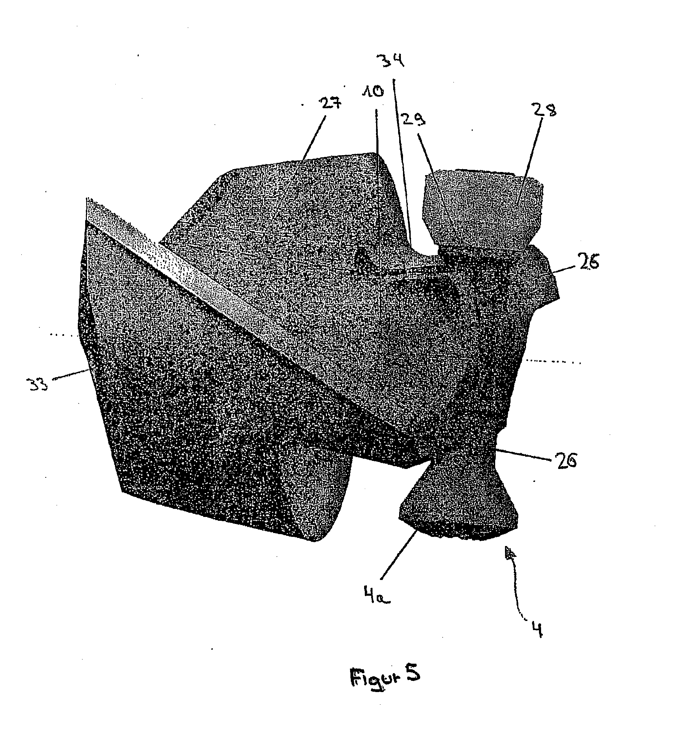

In Figur 5 ist ein Schneidkopf 2 entsprechend Figur 1 gezeigt, der einen schwalbenschwanzförmigen Bereich 10 umfasst, welcher in die zugeordnete Schwalbenschwanzführung des Halters 3 eingeführt wird.

Im schwalbenschwanzförmigen Bereich 10 ist in der rinnenförmigen Ausnehmung 23 eine Spannschraube 4a angeordnet.

Die Schraubenverbindung umfasst eine Spannschraube 4a, die an ihrem freien Ende mit einer Gewindemutter 28 verschraubt ist. Ein Einschrauben der Spannschraube 4a in die Gewindemutter 28 spannt die beiden Flankenabschnitte 18 und 19 des Halters 3 (siehe Figur 1) gegeneinander. Der schwalbenschwanzförmige Bereich 10 des Schneidkopfes 2 wird in der Schwalbenschwanz-Ausnehmung 13 in Richtung des Halters 3 gedrückt und fixiert. Die Gewindemutter 28 weist auf ihrer zum Gewinde der Spannschraube 4a weisenden Mantelfläche eine Schrägfläche 29 auf, die einer Schrägfläche im Halter 3 zugeordnet ist. Durch das Aufschrauben der Gewindemutter 28 auf die Spannschraube 4a kann der Schneidkopf 2 zusätzlich zentriert werden.

Die Spannschraube 4a weist auf ihrer Mantelfläche eine Aussparung oder eine Verjüngung 26 auf, welche ein Durchfließen von Kühlmittel vorsieht, wenn der Halter 3 zusätzlich mit einem Kühlmittelkanal zur Durchleitung von Kühlmittel ausgebildet ist.

Im Schneidkopf 2 ist im Bereich der Aussparung bzw. Verjüngung 26 eine Ausnehmung 27 vorgesehen, die eine Verbindung von der Aussparung bzw. Verjüngung 26 der Spannschraube 4a bis hin zu einer in der Freifläche 7 austretenden Öffnung 33 erzeugt. Aufgrund des schwalbenschwanzförmigen Bereichs 10 ist die Ausnehmung 27 im Schneidkopf im Bereich der Flanken 11 und 12 in der Art einer Ausnehmungs-Rinne 34 ausgebildet.

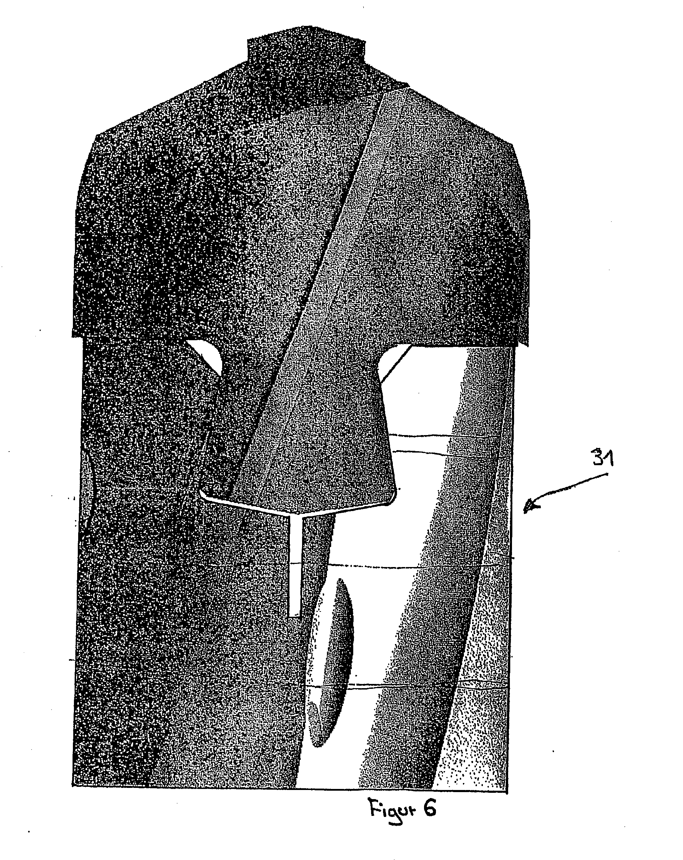

In Figur 6 ist ein Zwischenstück 31 gezeigt, welches in seiner Form dem stirnseitigen Anschlussbereich eines in Figur 1 dargestellten Halters 3 zur Aufnahme eines Schneidkopfes 2 nachgebildet ist. Das Zwischenstück 31 bildet einen Adapter zwischen dem Schneidkopf 2 und dem Halter 3, wenn dieser zum Beispiel als Hohlkörper ausgebildet ist. Es ist denkbar, dass das Zwischenstück 31 beispielsweise auf der zum Halter 3 gerichteten Mantelfläche einen radialen Absatz aufweist, der zum Einstecken des Zwischenstücks 31 in den Halter 3 vorgesehen ist. Ein derartiges Werkzeug eignet sich zum Beispiel zur Herstellung von Tiefenbohrungen.

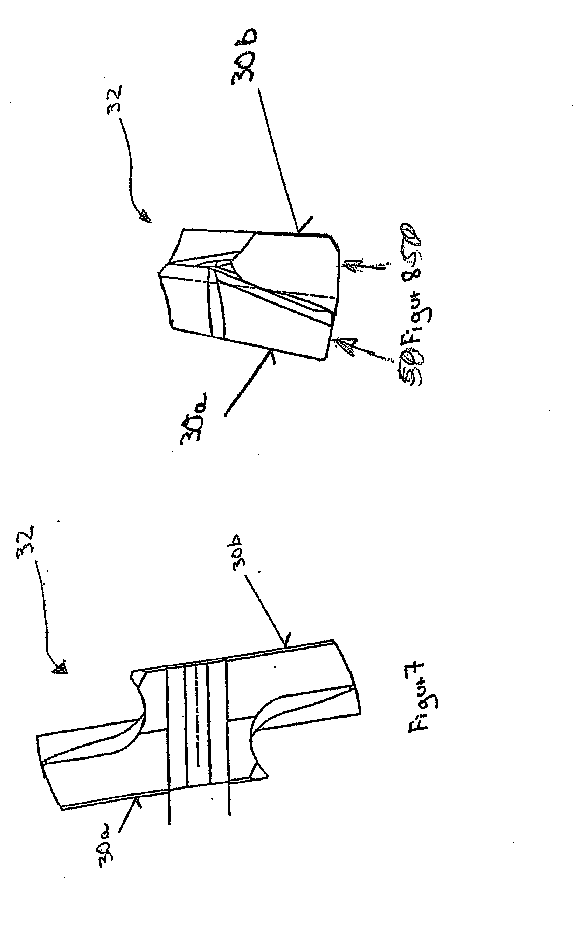

In den Figuren 7 und 8 ist jeweils ein Schneidkopf 2 dargestellt, der als plattenartiger Schneideinsatz 32 ausgebildet ist. Der Schneideinsatz 32 weist mit zur Schwalbenschwanz-Ausnehmung 13 passende Seitenflächen 30a und 30b auf. Der Schneidkopf 2 verzichtet auf seitlich herausstehende Anschlagflächen, wie beispielsweise die Anschlagflächen auf den Stirnseiten 16 und 17 des Schneidkopfes 2. Ein Anschlag findet z. B. am Grund der Schwalbenschwanz-Ausnehmung an den Anschlagflächen 50 statt.

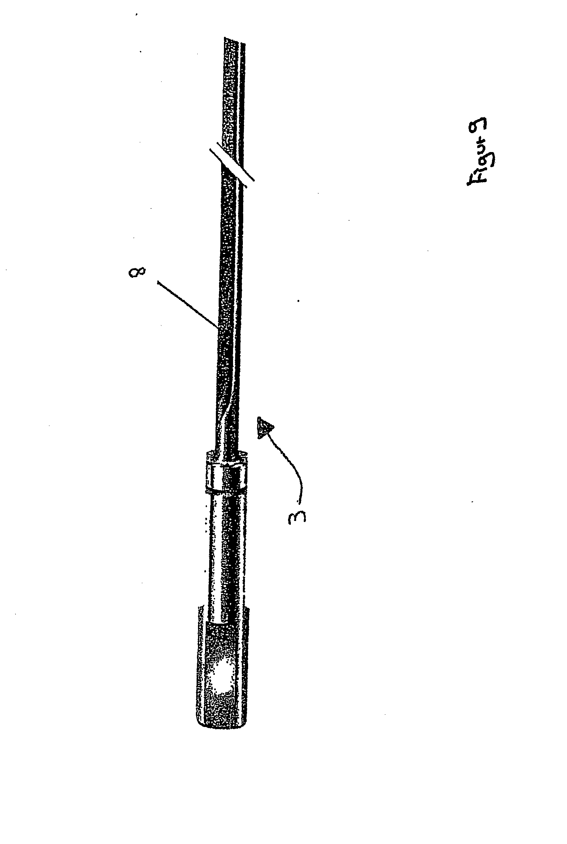

In Figur 9 ist ein Halter 3 dargestellt, welcher einen Höhlkörperabschnitt umfasst ausgebildet ist und auf der Mantelfläche einen geradlinig verlaufende Spannut 8 aufweist. Eine Anordnung eines Schneidkopfes 2 bzw. eines Schneideinsatzes 32 ist mit dem erfindungsgemäßen Zwischenstück 31 gemäß Figur 6 möglich.

**Bezugszeichenliste:**

| | |
|---|---|
| 1 | Bohrwerkzeug |
| 2 | Schneidkopf |
| 3 | Halter |
| 4 | Schraubverbindung |
| 4a | Schraube |
| 5 | Bohrspitze |
| 6 | Hauptschneide |
| 7 | Freifläche |
| 7a | Teilfläche |
| 7b | Teilfläche |
| 8 | Spannut |
| 9 | Nebenschneide |
| 10 | schwalbenschwanzförmiger Bereich |
| 11 | Flanke |
| 12 | Flanke |
| 13 | Schwalbenschwanz-Ausnehmung |
| 14 | Anschlagfläche, stirnseitig |
| 15 | Anschlagfläche, stirnseitig |
| 16 | Stirnseite |
| 17 | Stirnseite |
| 18 | Flankenabschnitt |
| 19 | Flankenabschnitt |
| 20 | Seitenwand |
| 21 | Seitenwand |
| 23 | Ausnehmung |
| 24 | Boden |
| 25 | Schlitz |
| 26 | Aussparung |
| 27 | Ausnehmung |
| 28 | Gewindemutter |
| 29 | Schrägfläche |
| 30a | Seitenfläche |
| 30b | Seitenfläche |
| 31 | Zwischenstück |
| 32 | Schneideinsatz |
| 33 | Öffnung |
| 50 | Anschlagfläche |

## Patentansprüche

1. Drehantreibbares Werkzeug zur spanabtragenden Bearbeitung, insbesondere Bohrwerkzeug mit einem Schneidorgan (2) sowie einem Halter (3) mit einem Schaftteil, wobei am Schneidorgan (2) zumindest eine Schneide (6) und ein schwalbenschwanzförmiger Bereich (10) und am Halter (3) eine dazu passende Schwalbenschwanz-Ausnehmung (13) ausgebildet ist, wobei das Schneidorgan (2) und die passende Schwalbenschwanz-Ausnehmung (13) derart aufeinander abgestimmt sind, dass das Schneidorgan (2) nur lateral zu einer Längsachse des Halters (3) in den Halter (3) eingeschoben werden kann, wobei zur Fixierung des Schneidorgans (2) gegenüberliegende Flankenabschnitte (18, 19) der Schwalbenschwanz-Ausnehmung (10), zwischen welchen der schwalbenschwanzförmige Bereich (10) bestimmungsgemäß angeordnet ist, über eine Schraubenverbindung (4) im Halter (3) aufeinander zu bewegbar sind und wobei das Schneidorgan (2) beim Fixieren durch die Schraubverbindung (4) eine Kraft in axialer Richtung erfährt, wobei das Schneidorgan ein Schneidkopf (2) ist und dass die Kraft in axialer Richtung ausschließlich durch den schwalbenschwanzförmigen Bereich (10) in Zusammenwirkung der Schwalbenschwanz-Ausnehmung (13) im Halter (3) bereitgestellt ist, **dadurch gekennzeichnet, dass** der schwalbenschwanzförmige Bereich (10) als Fortsatz direkt aus der stirnseitigen Anschlagfläche (14, 15) herausragt.

2. Werkzeug nach Anspruch 1, **dadurch gekennzeichnet, dass** der schwalbenschwanzförmige Bereich (10) an einer stirnseitigen Anschlagfläche des Schneidkopfs (2) anschließt.

3. Werkzeug nach einem der vorhergehenden Ansprüche, **dadurch gekennzeichnet, dass** der schwalbenschwanzförmige Bereich (10) auf die schwalbenschwanzförmige Ausnehmung (13) derart abgestimmt ist, dass die Kraft in axialer Richtung im Spannzustand des Schneidkopfes (2) die stirnseitige Anschlagfläche (14, 15) gegen Stirnseiten (16, 17) der Flankenabschnitte (18, 19) der Schwalbenschwanz- Ausnehmung (13) presst.

4. Werkzeug nach einem der vorhergehenden Ansprüche, **dadurch gekennzeichnet, dass** im schwalbenschwanzförmigen Bereich (10) eine Ausnehmung (23) auf eine im Halter (3) geführte Schraube (4) der Schraubverbindung in einer Weise abgestimmt ist, dass neben einer Lagefixierung durch einen Einschub des Schwalbenschwanzes in die Schwalbenschwanz-Ausnehmung (13) eine Zentrierung in Einschubrichtung des Schneidkopfes (2) auf die Drehachse des Werkzeuges über die Schraube (4a) der Schraubverbindung (4) stattfindet.

5. Werkzeug nach Anspruch 4, **dadurch gekennzeichnet, dass** die Ausnehmung (23) für eine Spannschraube (4a) im schwalbenschwanzförmigen Bereich (10) rinnenförmig ist.

6. Werkzeug nach einem der vorhergehenden Ansprüche, **dadurch gekennzeichnet, dass** im Halter (3) zumindest ein Kühlkanal vorgesehen ist, der an einer Stirnseite des Halters (3), die zum Schneidkopf (2) zeigt, eine Öffnung aufweist.

7. Werkzeug nach einem der vorhergehenden Ansprüche, **dadurch gekennzeichnet, dass** die Mantelfläche der Schraube (4a) eine Aussparung oder eine Verjüngung (26) aufweist.

8. Werkzeug nach Anspruch 7, **dadurch gekennzeichnet, dass** im Schneidkopf (2) im Bereich der Aussparung bzw. Verjüngung (26) eine Ausnehmung (27) vorgesehen ist.

9. Werkzeug nach einem der vorhergehenden Ansprüche, **dadurch gekennzeichnet, dass** der Schneidkopf (2) plattenartig mit zur Schwalbenschwanz-Ausnehmung (13) passenden Seitenflächen (30a, 30b) ausgebildet ist.

## Claims

1. A rotatably drivable cutting tool for machining, in particular a drilling tool with a cutting member (2) and a holder (3) with a shank portion, wherein on the cutting member (2) at least one cutting edge (6) and a dovetail-shaped portion (10) and on the holder (3) a matching dovetail recess (13) are formed, wherein the cutting member (2) and the matching dovetail recess (13) are matched to one another such that the cutting member (2) can be slid into the holder (3) only laterally to a longitudinal axis of the holder (3), wherein for fixating the cutting member (2) opposing flank sections (18, 19) of the dovetail recess (10), between which the dovetail-shaped portion (10) is positioned as intended, are movable towards each other via a screw connection (4) in the holder (3) and wherein the cutting member (2) in the fixating receives a force in the axial direction by the screw connection (4), wherein the cutting member is a cutting head (2) and the force in axial direction is provided solely by the dovetail-shaped portion (10) in cooperation of the dovetail recess (13) in the holder (3), **characterized in that** the dovetail-shaped portion (10) protrudes as an extension directly from the end abutment face (14, 15).

2. The cutting tool according to claim 1, **characterized in that** the dovetail-shaped portion (10) adjoins a front abutment surface of the cutting head (2).

3. The cutting tool according to any one of the preceding claims, **characterized in that** the dovetail-shaped portion (10) is adapted to the dovetail recess (13) in such a manner that in the clamped state the force in axial direction presses the end abutment face (14, 15) against end faces (16, 17) of the flank sections (18, 19) of the dovetail recess (13).

4. The cutting tool according to any one of the preceding claims, **characterized in that** in the dovetail-shaped portion (10) a recess (23) is adapted to a screw (4) of the screw connection, which is guided in the holder (3), in such a way that in addition to fixing the position by an insertion of the dovetail into the dovetail recess (13) a centering in inserting direction of the cutting head (2) to the axis of rotation of the tool takes place via the screw (4a) of the screw connection (4).

5. The cutting tool according to claim 4, **characterized in that** the recess (23) for a clamping screw (4a) in the dovetail-shaped portion (10) is groove-shaped.

6. The cutting tool according to any one of the preceding claims, **characterized in that** in the holder (3) at least one cooling channel is provided, which has an opening on an end face of the holder (3) facing the cutting head (2).

7. The cutting tool according to any one of the preceding claims, **characterized in that** the outer surface of the screw (4a) has an indentation or a taper (26).

8. The cutting tool according to claim 7, **characterized in that** in the cutting head (2) in the region of the indentation or taper (26) a recess (27) is provided.

9. The cutting tool according to any one of the preceding claims, **characterized in that** the cutting head (2) is formed plate-like with side faces (30a, 30b) matching the dovetail recess (13).

## Revendications

1. Outil entraînable en rotation pour l'usinage par enlèvement de copeaux, en particulier outil de forage avec un organe de coupe (2) ainsi qu'un support (3) avec une partie de tige, au moins un tranchant (6) et une partie en queue d'aronde (10) étant formés sur l'organe de coupe (2) et un évidement correspondant en queue d'aronde (13) étant formé sur le support (3), l'organe de coupe (2) et l'évidement correspondant en queue d'aronde (13) étant ajustés entre eux de telle manière que l'organe de coupe (2) ne puisse être introduit dans le support (3) que latéralement par rapport à un axe longitudinal du support (3), des parties de flanc (18, 19) opposées de l'évidement en queue d'aronde (10), entre lesquelles la partie en queue d'aronde (10) est disposée conformément à sa destination, étant déplaçables l'une vers l'autre au moyen d'une connexion à vis (4) du support (3) pour la fixation de l'organe de coupe (2), et l'organe de coupe (2) étant soumis à une force en direction axiale lors de la fixation par la connexion à vis (4), l'organe de coupe étant une tête de coupe (2) et la force en direction axiale étant exercée exclusivement par la partie en queue d'aronde (10) en coopération avec l'évidement en queue d'aronde (13) dans le support (3), **caractérisé en ce que** la partie en queue d'aronde (10) s'élève directement comme une saillie sur la surface de butée frontale (14, 15).

2. Outil selon la revendication 1, **caractérisé en ce que** la partie en queue d'aronde (10) est adjacente à une surface de butée frontale de la tête de coupe (2).

3. Outil selon l'une des revendications précédentes, **caractérisé en ce que** la partie en queue d'aronde (10) est ajustée à l'évidement en queue d'aronde (13) de telle manière qu'en état de serrage de la tête de coupe (2), la force en direction axiale serre la surface de butée frontale (14, 15) contre des faces frontales (16, 17) des parties de flanc (18, 19) de l'évidement en queue d'aronde (13).

4. Outil selon l'une des revendications précédentes, **caractérisé en ce que**, dans la partie en queue d'aronde (10), un évidement (23) est ajusté à une vis (4) de la connexion à vis, guidée dans le support (3), de manière à obtenir, outre une fixation en position par insertion de la queue d'aronde dans l'évidement en queue d'aronde (13), un centrage sur l'axe de rotation de l'outil dans la direction d'insertion de la tête de coupe (2) au moyen de la vis (4a) de la connexion à vis (4).

5. Outil selon la revendication 4, **caractérisé en ce que** l'évidement (23) est en forme de gouttière pour une vis de serrage (4a) dans la partie en queue d'aronde (10).

6. Outil selon l'une des revendications précédentes, **caractérisé en ce qu'**au moins un canal de refroidissement est prévu dans le support (3), lequel comporte une ouverture sur une face frontale du support (3) opposée à la tête de coupe (2).

7. Outil selon l'une des revendications précédentes, **caractérisé en ce que** la surface latérale de la vis (4a) présente une dépouille ou un rétrécissement (26).

8. Outil selon la revendication 7, **caractérisé en ce qu'**un évidement (27) est prévu dans la tête de coupe (2) au niveau de la dépouille ou du rétrécissement (26).

9. Outil selon l'une des revendications précédentes, **caractérisé en ce que** la tête de coupe (2) est réalisée en forme de plaque avec des surfaces latérales (30a, 30b) ajustée à l'évidement en queue d'aronde (13).
